# EUROPEAN PATENT APPLICATION

(11) **EP 1 964 876 A1**
(43) Date of publication of application: **03.09.2008**
(21) Application number: 06834359.9
(22) Date of filing: 04.12.2006
(51) Int. Cl.: C08J 11/12

(54) **WASTE PLASTIC LIQUEFACTION PLANT AND WASTE PLASTIC LIQUEFACTION PROCESS**

(30) Priority: 06.12.2005 JP 2005352597
(71) Applicant: Kohara, Yuji, Kure-shi, Hiroshima 729-2608 (JP)
(72) Inventor: KOHARA, Yuji, Kure-shi, Hiroshima 729-2608 (JP); SHIZUMA, Kiyoshi, Higashihiroshima-shi, Hiroshima 7392109 (JP)
(74) Representative: Betten & Resch
(86) International application number: PCT/JP2006/324604
(87) International publication number: WO 2007/066782

(57) **Abstract**

An oil reclaiming system for plastic wastes capable of producing oils and carbonized residues in a shorter period of time and at a higher yield and capable of providing oils and carbonized residues of higher qualities, wherein granite is disposed in a furnace.

## Description

### TECHNICAL FIELD

The present invention relates a plastic wastes decomposition technique wherein plastic wastes are introduced into a reacting furnace and decomposed by heating to be converted into reusable substances.

### BACKGROUND ART

Conventional processes for decomposing plastic wastes are carried out by heating plastic wastes in furnaces at high temperatures of 500 to 800°C with added decomposition promoters such as sodium phthalate and soda stearate. Breakage of polymer molecules of the plastic wastes by such heating results in the generation of liquefied fat and oil components. The fat and oil components can then be fractionated and refined to give reusable oils and fats such as naphtha.

When the plastic wastes are decomposed at such high temperatures of 500 to 800°C as described above, the cost for fuel and electric heating for maintaining such temperatures will disadvantageously increase. To cope with it, the present inventors have proposed in Patent Reference 1 measures by which plastic wastes introduced into furnaces are heated at lower temperatures of 250 to 350°C in such a way that the plastics may be roasted instead of being burned, to decompose them into fat and oil components which compose the plastics, and generated gases are removed and cooled in a cooler to be reduced into oils and fats. Specifically, a high efficiency of such an oil reclaiming process has been attained through the use of feldspar and mica paved in the furnaces.

Patent Reference 1: Japanese Unexamined Patent Publication No. 2004-168806

### DISCLOSURE OF THE INVENTION

### PROBLEMS TO BE SOLVED BY THE INVENTION

When plastic wastes are decomposed by an oil reclaiming system for plastic wastes as claimed in Patent Reference 1 (batch type) the amount of oil collected per hour is 73 g/hr, as indicated in Experiment 4 of EXAMPLES of Description, showing a value which is twice or more in comparison with that of Experiment 5 (refractory cement only) wherein no feldspar is contained in the furnace. In consideration of actual operation, however, it is desirable that a higher efficiency in oil reclaiming be achieved in a shorter period of time. In addition, it is also desirable that decomposed products (oils, carbonized residues) be more valuable for industrial use. As such, it is the object of the present invention to provide measures capable of producing oils and carbonized residues in a shorter period of time and at a higher yield and capable of providing oils and carbonized residues of higher qualities.

### MEANS FOR SOLVING THE PROBLEMS

The present invention (1) is an oil reclaiming system for plastic wastes having a furnace for heating the plastic wastes for decomposition, wherein granite is disposed in the furnace. The system topically includes a furnace having a heater along the outer periphery of its peripheral wall, the outer periphery of the heater being coated with a heat insulator, a feeder for charging plastic wastes into the furnace, gas draw tubes for recovering a gas generated in the furnace through thermal decomposition of the charged plastic wastes and a residue discharge device for recovering a residue produced by thermal decomposition of the charged plastic wastes.

The present invention (2) is the system according to the invention (1) wherein the granite is applied to the inner wall of the furnace.

The present invention (3) is a process for reclaiming oils from plastic wastes comprising a step of heating the plastic wastes for decomposition, wherein the step for decomposition is carried out under the presence of granite.

The present invention (4) is a process for producing oils using plastic wastes as a raw material comprising a step of heating the plastic wastes for decomposition, wherein the step for decomposition is carried out under the presence of granite.

The present invention (5) is a process for producing carbonized residues using plastic wastes as a raw material comprising a step of heating the plastic wastes for decomposition, wherein the step for decomposition is carried out under the presence of granite.

The mineral referred to as "granite" in Claims and Description is, for example, one containing 65% or more (for example, 65 to 70%) of silicon dioxide, mainly composed of quartz and feldspar and further containing one or more colored minerals (for example, biotite and amphibole).

### EFFECT OF THE INVENTION

According to the present invention, since plastic wastes may more efficiently be decomposed in a shorter period of time, such an effect is obtained that waste disposal may quickly be performed and decomposed products that are valuable for industrial use (oils, carbonized residues) may be obtained in a high yield. Also with respect to decomposed products, when they are processed at a low temperature (at 150°C) for example, industrially useful components such as styrene and ethyl benzene (raw material for styrene) may be obtained in abundance. Also with respect to carbonized residues (cokes from decomposed plastic wastes), components having no sulfur content, utilizable as an excellent coke source which may be used for ironmaking for producing non-fragile iron, may be obtained in abundance.

### BRIEF DESCRIPTION OF THE DRAWINGS

Fig. 1 is a front view of an oil reclaiming system in whole (continuous operation type) according to the present invention as seen from the side showing the direction of processing flow(from left to right in the drawing);
Fig. 2 is a view of the oil reclaiming system in whole (continuous operation type) as seen from the side showing the upstream of the direction of processing flow(corresponding to a view as seen from the left in Fig. 1);
Fig. 3 is a view of the oil reclaiming system in whole (continuous operation type) as seen from the side showing the downstream of the direction of processing flow(corresponding to a view as seen from the right in Fig. 1).
Fig. 4 is a sectional view of the oil reclaiming system in whole (continuous operation type) as seen from the side showing the direction of processing flow(from left to right in the drawing);
Fig. 5 is a vertical section of a furnace of the oil reclaiming system (continuous operation type);
Fig. 6 is a cross section of the furnace of the oil reclaiming system (continuous operation type);
Fig. 7 is a perspective view of an oil reclaiming system in whole (batch system) according to the present invention;
Fig. 8 is a view showing the internal structure of a furnace of the oil reclaiming system (batch system);
Fig. 9 is a view showing a cooling means of the oil reclaiming system (batch system); and
Fig. 10 is a view showing the manner in which a gas cooled and liquefied on the upper surface of the furnace is led to a reservoir in the oil reclaiming system (batch type).

### BEST MODE FOR CARRYING OUT THE INVENTION

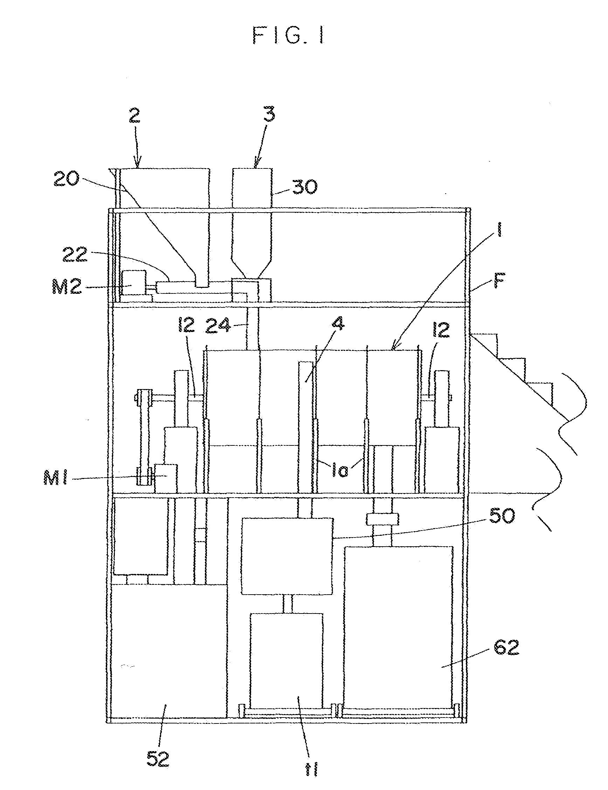

First, with reference to Figs. 1 to 6, an oil reclaiming system (continuous operation type) according to a best mode will be described. As described above, the oil reclaiming system is characterized that granite is disposed in a furnace for heating plastic wastes for decomposition. As such, the overall structure of the oil reclaiming system is first described, followed by description of a constituent feature (furnace) relating to the characterizing part, before describing the remaining features. In this best mode, an embodiment wherein a granite-containing layer is applied to the inner wall of a furnace (continuous operation type) is illustrated; however, any embodiment may be allowed as long as granite is present in a furnace. For example, embodiments are possible in which granite (or a ceramics which contains granite, or the like) is paved over the hearth (or on a plate, such as iron plate, placed over the hearth, or the like) of a furnace and granite may be allowed to mix into plastic wastes.

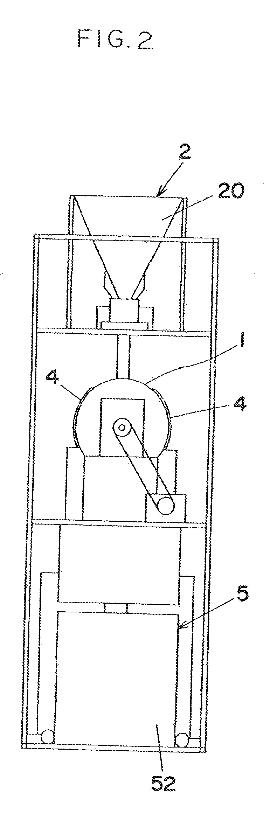

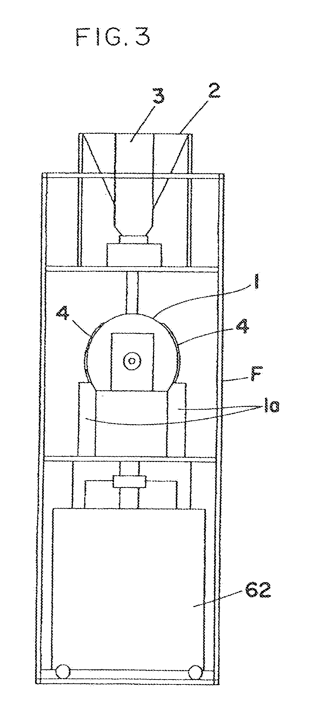

With reference to the drawings, the overall structure of the oil reclaiming system (continuous operation type) will be described in detail. Fig. 1 is a front view of the oil reclaiming system in whole as seen from the side showing the direction of processing flow(from left to right in the drawing). Also, Fig. 2 is a view of the oil reclaiming system in whole as seen from the side showing the upstream of the direction of processing flow(corresponding to a view as seen from the left in Fig. 1). Further, Fig. 3 is a view of the oil reclaiming system in whole as seen from the side showing the downstream of the direction of processing (corresponding to a view as seen from the right in Fig. 1). As shown in these drawings, the oil reclaiming system is composed of a furnace 1 having a cylindrical shape along the direction of processing, a feeder 2 for feeding plastic wastes into the furnace 1, a catalyst feeder 3 for feeding a sodium-based catalyst into the furnace 1, gas draw tubes (ducts) 4 for extracting gases generated through decomposition by heating the plastic wastes introduced into the furnace to lead the gas to a cooler 5 to be subsequently referred to, the cooler 5 for cooling the gas extracted through the gas draw tubes 4 and a residue discharge device 6 for discharging (receiving) carbonized residues mostly consisting of carbon produced in the furnace 1. These components are accommodate and retained in a machine frame F.

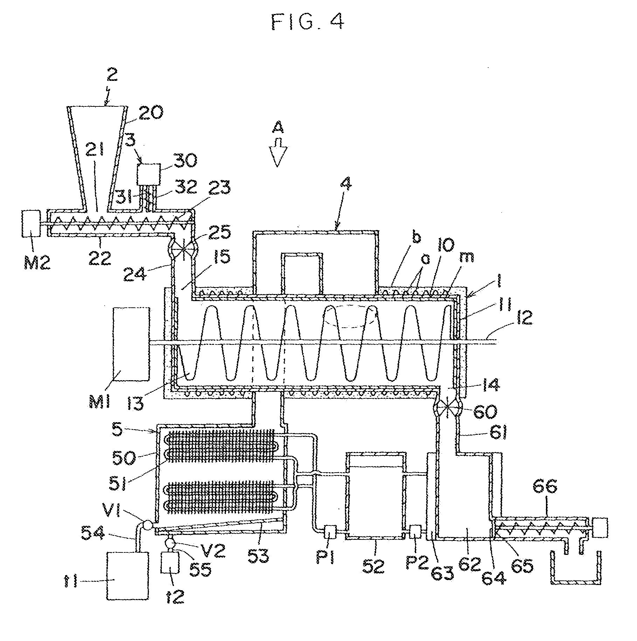

Next, the structure of the furnace 1 as a characteristic constituent feature of the present invention will be described in detail. First, with reference to Figs. 4 to 6, a granite-containing layer, as a characterizing part of the present invention, formed over the inner surface of the furnace 1 will be described in detail. The base structure of the furnace 1 is made of a peripheral wall 10 formed in a cylindrical shape along the direction of processing and side walls 11 closing the peripheral wall 10 at the front and the back (closing the axially opposite ends). The inner surface of this horizontally oriented cylindrical furnace 1 (the inner surface composed of the peripheral wall 10 and the side walls 11, 11) is provided in whole or in part with a granite-containing layer m. The granite-containing layer m is not limited as long as it contains granite, examples which include shaped articles of granite itself (for example, panels), ceramics containing ground granite (for example, ceramics made of ground granite, refractory cement and water that are admixed and calcined, such as panels) and castables containing ground granite. More specifically, an embodiment in which a ceramics of natural granite formed into a panel is attached to the surface of the inner wall of the furnace and an embodiment in which ground natural granite is kneaded with a refractory cement and water to cause it to be mortared to the surface of the inner wall (the mortared material will be calcined by the heat of operation of the furnace to form a granite-containing layer as a ceramics) may be mentioned. The granite-containing layer may be formed anywhere on the inner surface. It is however more effective to form it over the surface of the inner wall than over the hearth. Although, in this best mode, a cylindrical furnace is illustrated, in the case of other shapes, positioning of a granite-containing layer will be determined appropriately according to such shapes. For example, in the case of a furnace as a U-shaped tube having a flat top and a peripheral wall having a U-shaped cross section (one end of which is provided with a feed port for plastic wastes and the other end of which is provided with a discharge port), a granite-containing layer is formed in whole or in part over the upper side, the peripheral wall, the side wall with the feed port and the side wall with the discharge port.

As apparent from the results of Examples to be subsequently referred to, the granite-containing layer is preferably embodied as containing granite as coarsely ground pieces having a size of a pebble (Experiment 6 of EXAMPLES). In such an embodiment, the amount of oil collected per hour is much higher in comparison with an embodiment where granite is present as a plate (Experiment 1 of EXAMPLE) or as powder (Experiment 3 of EXAMPLE) and, in addition, cracks may be prevented from occurring in calcined ceramics panels. When the ground pieces are provided over the inner wall (especially, over the wall surface which is subjected to the influence of gravity), a refractory cement or the like should be used to secure the ground pieces to the wall. Also, when the ground pieces are placed at locations where no influence of gravity is exerted, such as on the hearth, they may merely be placed such as by being paved.

Next, other constituent features in relation to the internal structure of the furnace 1 will be described. Since other constituent features than the granite-containing layer described above are not characteristic of the present invention, embodiments in which some of the features to be described below are different or absent and embodiments in which other constituent features are added are still within the range of the present invention as long as such embodiments possess the characteristics of the present invention mentioned above.

First, as shown in Figs. 1 to 3, the furnace 1 is secured to the machine frame F by supports 1a. A rotation axis 12 is rotatably hung across the machine frame F in such a manner that it penetrates the furnace 1 horizontally through its bore along the axial center. Further, as shown in Fig. 4, this rotation axis 12 is provided with a spiral agitator 13 on its peripheral surface. The agitator 13 is rotated by operation of a motor M1 attached to one end of the rotation axis 12, which rotates the rotation axis 12.

Next, the furnace 1 has, on its outside, an electric heater a wound around the outer peripheral surface (tubular peripheral wall 10) of the furnace 1 for maintaining the temperature inside the furnace 1 at a predetermined temperature and has further, on its outer periphery, a heat insulator b wound in a multilayered manner. In this best mode, such a heating means is adopted in view of facilitating and ensuring temperature control of the furnace. Any form of heating may however be used as long as it can preset the working temperature inside such an oil reclaiming system to or within predetermined values or ranges (for example, a burner may be used in Examples).

Next, the feeder 2 is composed of a hopper 20 for introducing plastic wastes, a transport cylinder 22 in communication with a bottom opening 21 of the feeder 20, a screw-like conveyor 23 hung inside the transport cylinder 22 and a motor M2 for driving the conveyor 23. Further, the forward end of this transport cylinder 22 is in communication with a connector cylinder 24 for introducing plastic wastes, which is in communication with a feed port 15 provided at one end (to the left in Fig. 4) of the furnace 1. The plastic wastes introduced into the hopper 20 is forcibly fed toward the forward end of the transport cylinder 22 (to the right in Fig. 4) by operation of the conveyor 23 being driven by the motor M2. The plastic wastes forcibly fed to the forward end of the transport cylinder 22 passes through the connector cylinder 24 connected to the forward end to be introduced through the feed port 15 into the furnace 1. In the feeder 2, a delivery mechanism 25 as a rotating valve is provided at the forward end of the conveyor 23 for forcibly feeding the plastic wastes, in order to prevent gases generated by the thermal decomposition of the plastic wastes fed in the furnace 1 from backflowing and outflowing due to the pressure. Materials, constructions and the like of the feeder 2 are appropriately determined so that the plastic wastes, wet after being washed with water, may be fed into the furnace 1.

Next, the catalyst feeder 3 is composed of a hopper 30 for introducing catalyst, a detering mechanism 31 for separating and feeding a predetermined amount from the catalyst introduced into the hopper 30 and a transport cylinder 32 for guiding the predetermined amount of catalyst. The lower end of the transport cylinder 32 is communication with an intermediate portion of the transport cylinder 22 along the direction of transport. Consequently, the plastic wastes from the feeder 2 is mixed with the predetermined amount of catalyst, before being charged into the furnace 1.

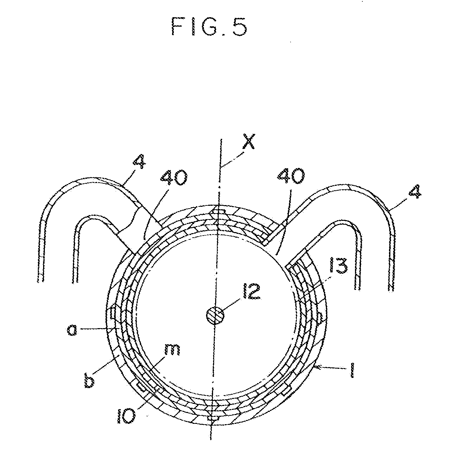

Next, the gas draw tubes 4 are positioned slightly rearward from the center of the furnace 1, as shown in Fig. 4. Also, as shown in Fig. 5, the gas draw tubes 4 are provided via connector ports 40 which are in communication with the bore of the furnace 1 at both sides of the furnace 1 in relation to the axial direction of the furnace 1 through an angle of approximately 30° in relation the vertical center line X passing through the axial center of the peripheral wall 10. Consequently, gases (gases generated from plastic wastes), water vapors and the like accumulated at the upper portion of the furnace 1 will efficiently be led to the cooler 5 to be subsequently referred to.

Next, the cooler 5 is composed of an airtightly formed cooling box 50, a radiator-like heat exchanger 51 disposed in the box, a cooling water tank 52 for storing cooling water, which is circulated in the heat exchanger 15, cooled in a refrigerator and a pump P1 for circulating the cooling water in the tank 52. A tray-like receiver 53 is disposed in the cooling box 50 and below the heat exchanger 51 for receiving oil and fat components condensed and reclaimed by cooling. An oil discharge tube 54 is connected via a valve V1 to the bottom of the receiver 53 for discharging the stored oil and fat components, to which a recovery tank t1 is further connected. The receiver 53 also stores water condensed from the water vapor, which is generated from the water fed into the furnace, led into the cooling box 50 via the gas draw tubes 4 along with the gas 1 (NaCl produced by reaction of decomposition of vinyl chloride with the sodium-based catalyst), in addition to the reclaimed oil and fat components. The water and the oil and fat components will separate into two layers, the water layer sedimenting as the lower layer. The salt water passes through a water discharge tube 55 connected via a valve V2 to the bottom surface of the receiver 53 to be stored in a salt water tank t2 connected at the bottom end of the tube. Separation into two layers does not have to be carried out in the system and, instead, a mixture liquid can be discharged and then separated into two layers.

The residue discharge device 6 is composed of a discharge tube 61 connected to a residue discharge outlet 14 provided at the other end of the furnace 1, a valve shutter-like residue draw mechanism 60 operable to hermetically seal the residue discharge outlet 14 to the outside and forcibly feed residues fed thereto and a residue draw bin 62 connected downstream along the direction of feed. The residue draw mechanism 60 functions to sequentially feed residues into the residue draw bin 62 by being driven by a motor M3 (not shown). The residue draw bin 62 has its outer periphery surrounded by a cooler 63 consisting of water jackets. The cooling water in the cooling water tank 52 mentioned above is circulated in the cooler 63 by a pump P2. Consequently, carbonized residues recovered in the residue draw bin 62 is cooled and airtightly retained so that dust explosion due to synergistic action with heat while the residues are in contact with the air may be prevented. The residue draw bin 62 for recovering residues is further provided with a draw outlet 64 at the bottom for discharging the cooled residues. The draw outlet 64 also has a shutter 65 installed in an openable/closable manner for preventing outflow from the residue draw bin 62. A conveyor 66 is provided at the draw outlet 64 for drawing out the cooled residues when the shutter 65 is open.

Next, a method of operating the oil reclaiming system (continuous type) according to this best mode is illustrated by way of example. First, the hopper 20 is loaded with chopped plastic wastes. The plastics may be loaded as wet after being washed with water but without being drained or dried. The catalyst feeder 3 is loaded with a sodium-based catalyst (such as sodium hydroxide and sodium bicarbonate) for decomposing chlorine compounds produced when vinyl chloride contained in the plastic wastes is decomposed. The temperatures of the furnace in which the plastic wastes in the hopper and the sodium-based catalyst are loaded are not particularly limited, with the upper limit preferably at or below 500°C, and are preset in the range of 150 to 400°C, for example.

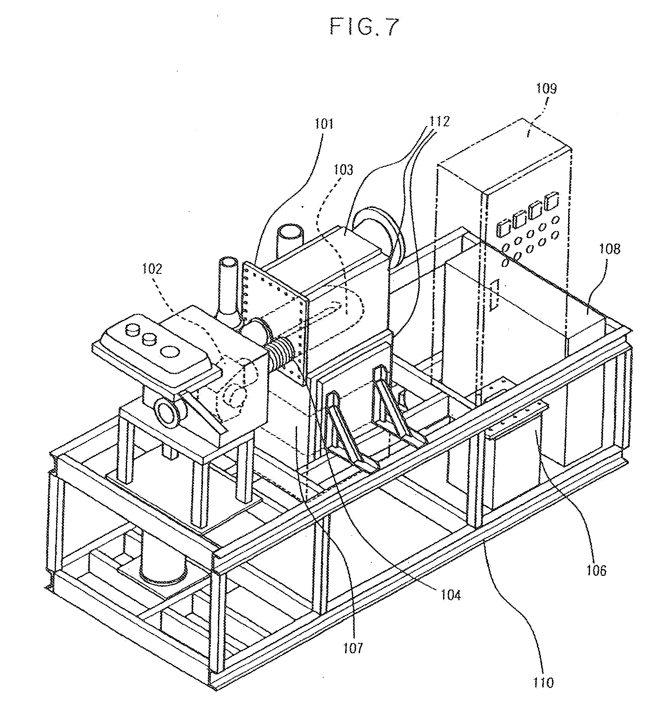

Next, with reference to Figs. 7 to 10, an oil reclaiming system according to another best mode (batch system) will be described. Description of features that are identical to those of the continuous type will be omitted. First, as shown in Fig. 7, the oil reclaiming system is composed of an approximately rectangular furnace 101, a burner 102 for heating inside the furnace, a heat transfer piping 103 connected to the burner 102 and penetrating the interior of the furnace 101, a thermal insulator 104 for preventing the heat transfer piping 103 from being cooled up two where the tube is introduced into the furnace 101, a cooling water tank 106 connected with a water pump, in which cooling water to be fed two a cooling means (to be subsequently referred to) for cooling and liquefying gases generated in the furnace 101 is stored, a reservoir 107 provided immediately below the furnace 101, a manipulator 109 for allowing temperature control and the like of the furnace 101 and a frame 110 for housing the mentioned components. As shown, a refrigerator 108 for cooling the reservoir 107 by a cooling gas may further be included.

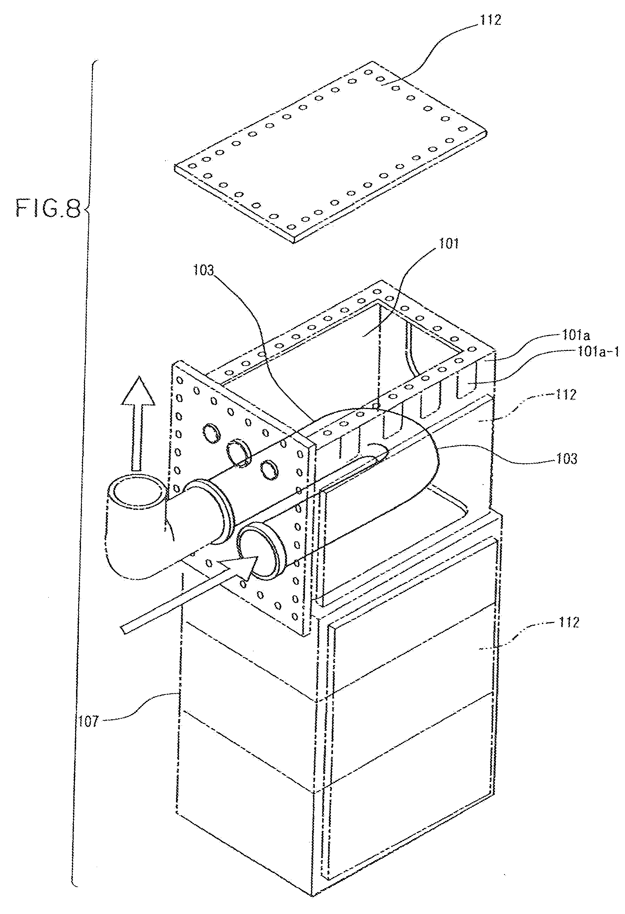

Next, with reference to Fig. 8, the structure of the furnace 101 according to this best mode will be described. The furnace 101 has the heat transfer piping 103 disposed therein in such a manner that it may form a U shape. Burned air from the burner 102 is introduced into the heat transfer piping 103. As a result of the heat of the burned air being transferred through the heat transfer piping 103 into the furnace 101, the furnace 101 is heated from inside. Decomposition temperatures inside the furnace 101 are controlled through adjustment of the combustion at the burner 102.

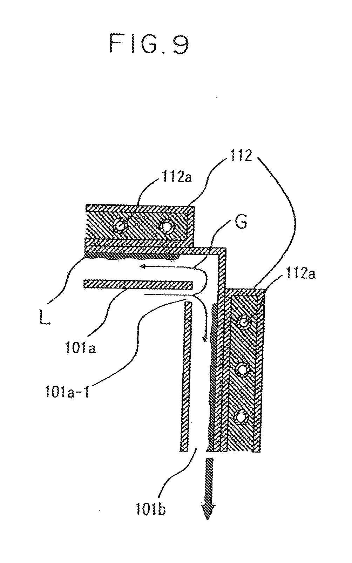

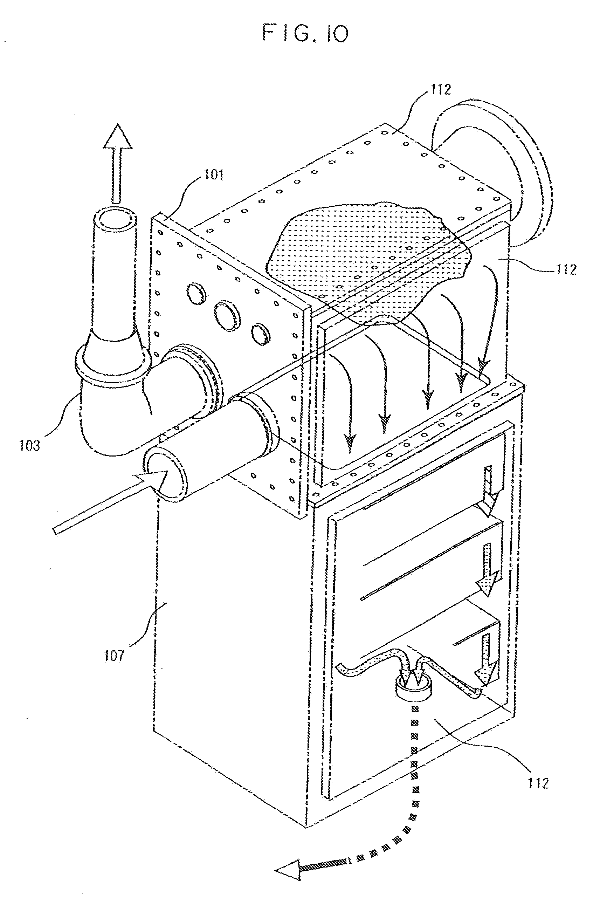

Next, with reference to Fig. 9, the structure of the cooling means according to this best mode will be described. Fig. 9 is a partial section of the furnace 101. The furnace is provided with coolers 112 mounted on top and on both sides, in which cooling water pipings 112a are embedded. The furnace 101 has a dual structure in the vicinity of the coolers 112. Specifically, the furnace 101 has inner walls 101a on top and on both sides for building space for gases generated from decomposition to be introduced (gas introduction space 101b). The inner walls 101a on both sides are provided with introduction slits 101a-1 for introducing gases generated in the furnace 101 into the gas introduction space 101b. In such configuration, a gas G generated from decomposition will be led through the introduction slits 101a-1 into the gas introduction space 101b and contacted with the coolers 112 to be cooled and liquefied, as shown. The liquid L will then fall down with its own gravity and to be stored in the reservoir 107 mentioned above, as indicated by the arrows in the drawing. The reservoir 107 is also equipped with a similar cooler. In a case where the gas is led to the reservoir 107 without being liquefied, therefore, cooling on the basis of a similar mechanism will be carried out in the reservoir 107. As an example, Fig. 10 shows the manner in which a gas cooled and liquefied on the upper surface of the furnace 101 is led to the reservoir 107.

Next, a method of operating the oil reclaiming system (batch system) according to this best mode is illustrated by way of example. First, chopped plastic wastes are placed in the furnace 101 at a predetermined location (for example, on an iron plate placed on the heat transfer piping 103). The plastics may be introduced as wet after being washed with water but without being drained or dried. The plastic wastes are mixed with a sodium-based catalyst (such as sodium hydroxide and sodium bicarbonate) for decomposing chlorine compounds produced when vinyl chloride contained in the plastic wastes is decomposed. The temperatures of the furnace in which the plastic wastes and the sodium-based catalyst are introduced are not particularly limited, with the upper limit preferably at or below 500°C, and are preset in the range of 120 to 350°C, for example.

### EXAMPLES

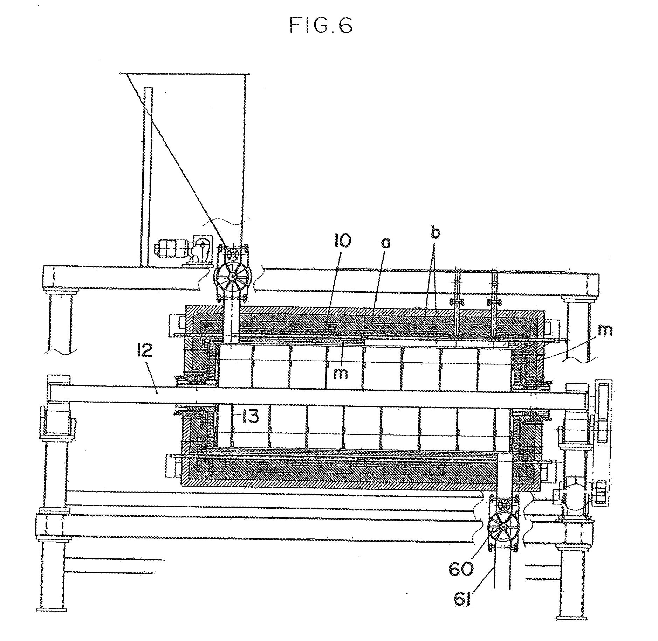

The present invention will be illustrated in more detail with reference to Examples. In Examples, a batch-type oil reclaiming system as shown in Fig. 6 and other drawings was used. Chopped plastic wastes were placed on an iron plate disposed on the heat transfer piping 103. For Experiments 1 and 2, a granite plate was applied to the iron plate, for Experiment 3, a refractory cement was applied to the iron plate which was then calcined and for Experiment 6, ground granite was applied to the iron plate.

### 1. Experimentation

Experiment 1 (Example 1): natural granite prate plus moisture added
Experiment 2 (Example 2): natural granite plate (no moisture added)
Experiment 3 (Example 3): powdery granite in mixture with refractory cement plus moisture added
Experiment 4 (Comparative Example 1): ground feldspar (Patent Reference 1) (pebbles) plus moisture added
Experiment 5 (Comparative Example 2): refractory cement plus moisture added
Experiment 6 (Example 4): ground granite (pebbles) plus moisture added

### 2. Conditions and Results

The conditions and results of Experiments are shown in Table 1. Most noteworthy data are the amount of oil collected per hour as calculated by dividing the total amount of oil collected by the net processing time in hour and the amount of residue of plastic wastes which was not decomposed into oil. The results of Experiments in the light of such remarks are summarized as follows.
(1) The granite plate (Experiment 1), the powdery granite in mixture with refractory cement (Experiment 3) and the ground granite (Experiment 6) with moisture added provide 100 g or more of oil collected per hour and enable constant oil reclaiming for plastic wastes.
(2) With no moisture added (Experiment 2), the amount of oil collected per hour is slightly less at 92 g, showing a relatively small influence of moisture added.
(3) Use of feldspar (Experiment 4) provides a smaller amount of oil collected per hour in comparison with the use of granite and, in particular, provides 50% or less of the amount of oil collected per hour in comparison with the use of ground granite (Experiment 6) comparable to the form of feldspar (ground). It has thereby been proven that granite is far effective than feldspar in oil reclaiming capability for plastic wastes.
(4) Use of refractory cement without granite (Experiment 5) provides a very small amount of oil collected per hour of 34 g, with residues containing undecomposed plastic wastes, showing an extremely poor oil reclaiming capability for plastic wastes.

Based on the results, it has been verified that granite has an excellent capability in oil reclaiming for plastic wastes. Furthermore, it was found that, as indicated by the results of analysis for components of collected oils, useful components can be obtained by virtue of processing at a low temperature of 150°C.

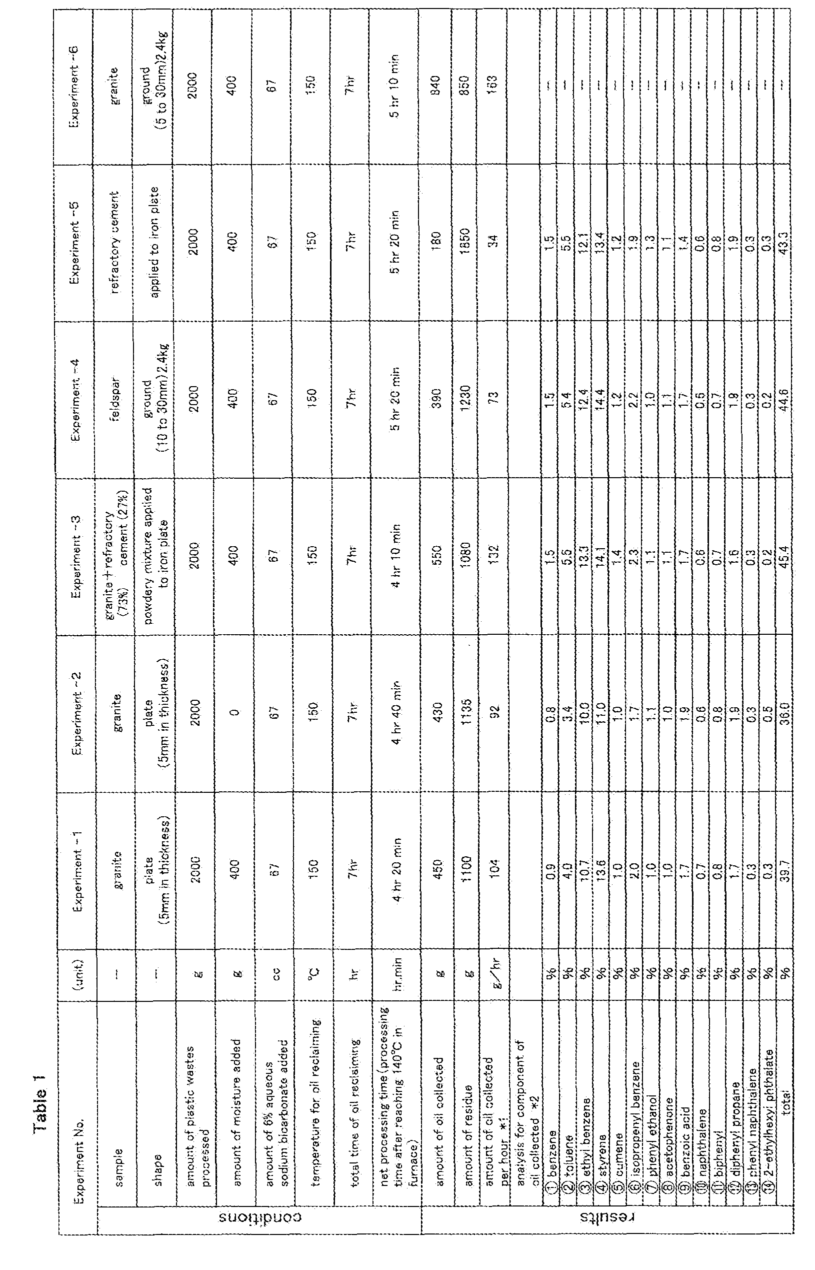

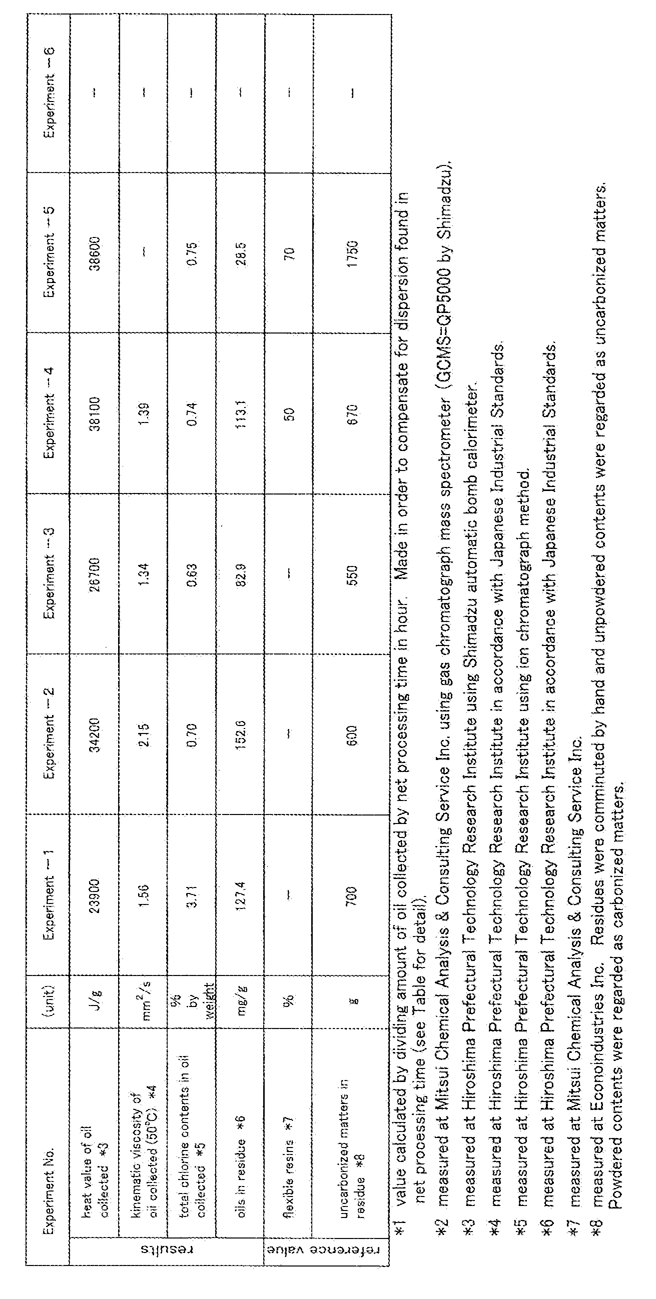

## Claims

1. An oil reclaiming system for plastic wastes having a furnace for heating the plastic wastes for decomposition, wherein granite is disposed in the furnace.

2. The oil reclaiming system for plastic wastes according to Claim 1, wherein the granite is applied to the inner wall of the furnace.

3. A process for reclaiming oils from plastic wastes comprising a step of heating the plastic wastes for decomposition, wherein the step for decomposition is carried out under the presence of granite.

4. A process for producing oils using plastic wastes as a raw material comprising a step of heating the plastic wastes for decomposition, wherein the step for decomposition is carried out under the presence of granite.

5. A process for producing carbonized residues using plastic wastes as a raw material comprising a step of heating the plastic wastes for decomposition, wherein the step for decomposition is carried out under the presence of granite.
